# EUROPEAN PATENT SPECIFICATION

(11) **EP 0 355 320 B1**
(45) Date of publication and mention of the grant of the patent: **29.01.1997**
(21) Application number: 89111606.3
(22) Date of filing: 26.06.1989
(51) Int. Cl.: G06F 12/08

(54) **Improved multiprocessor cache and method for maintaining coherence**
Mehrprozessor-Cachespeicher und Verfahren zur Aufrechterhaltung der Cache-Koherenz
Antémémoire de multiprocesseur et méthode pour maintenir cohérence

(30) Priority: 16.08.1988 US 232722
(43) Date of publication of application: 28.02.1990
(73) Proprietor: International Business Machines Corporation, Armonk, N.Y. 10504 (US)
(72) Inventor: Liu, Lishing, Pleasantville New York 10570 (US)
(74) Representative: Schäfer, Wolfgang, Dipl.-Ing.

(56) References cited:
- US-A- 4 394 731
- ACM TRANSACTIONS ON COMPUTER SYSTEMS, vol. 4, no. 4, November 1986, pages 273- 298; J. ARCHIBALD et al.: "Cache coherence protocols: evaluation using a multiprocessor simulation model"

## Description

The invention relates to caches in a multiprocessor system according to the preamble of claim 1.

Modern high performance stored program digital computers conventionally fetch instructions and data from main memory and store the fetched instructions and data in a cache memory. A cache is a local memory that is typically much smaller and much faster than the main memory of the computer. Virtually all high performance digital computers use a cache and even some commercially available microprocessors have local caches.

Caches have been developed because it has not been possible to build extremely large memories at a reasonable cost that operate having an access time commensurate with modern day pipelined processors. It is however possible to build inexpensive, small memories that can keep up with the processor. Since an instruction in the cache can be immediately accessed by the processor, caches have been used to speed up computer performance.

It has been observed that items (either instruction or data) once referred tend to be referred to again in the near future. This property is known as the "Temporal Locality of Reference" and it is a rationale for keeping the most recently referenced items in the cache. It has also been observed that if an item is referenced, then other items that are physically close to the reference item are also likely to be referenced. This second property is known as "Spatial Locality of Reference" and it is a rationale for keeping cache lines that are blocks of continuous items.

Caches can be used in both multiprocessor and uniprocessor systems. In the type of multiprocessor (MP) system known as the tightly coupled multiprocessor system in which several processors (CP) have their own caches that share a common operating system and memory, there are additional problems since it is necessary for each cache to know what has happened to lines which may be in several caches simultaneously. In a multiprocessor system where there are many CPs sharing the same main storage, each CP is required to obtain the most recently updated version of data according to architecture specifications when access is issued. This requirement necessitates constant monitoring of possible data consistencies among caches, often known as the cache coherence problem.

There are various types of caches in prior art multiprocessor systems. One type of cache is the store through (ST) cache which does not interfere with the CP storing data directly to the main storage (or second level cache) in order to always update changes of data to main storage. Upon the update of a store through to main storage appropriate cross interrogate (XI) actions may take place to invalidate the copies of a cache line located in caches other than the one at the CP that initiated the store. Usually store through cache designs require substantial main storage bandwidths to incorporate the data stores.

Another type of cache design is the store-in cache (SIC). SICs are described in U.S. Patents 3,735, 360 to Anderson et al. and 3,771,137 to Warner et al. A SIC cache directory is described in detail in U.S. Patent, 4,394,731 to Flusche et al. in which each line in a store-in cache has its multiprocessor shareability controlled by an exclusive/read only (EX/RO) flag bit. The main difference between ST and SIC caches is that, all stores in SIC are directed to the cache itself (which may cause a cache miss if the stored line is not in the SIC cache). In a store-in cache design data transfers upon a misfetch can take place through a cache to cache transfer bus (CTC) if a copy is in the remote cache. A storage control element is used which contains copies of the directories in each cache. This permits cross interrogate (XI) decisions to be resolved fairly efficiently. Usually cache line modifications are updated to main storage only when the lines are replaced from the cache.

Lines in a cache are typically replaced in accordance with a replacement algorithm which usually ages out a least recently used line. In a store-in cache design, when such a modified/changed cache line ages out it is also written to memory. As a result in the store-in cache design main storage bandwidth is reduced at the expense of more complex coherence control and the penalties arising from cross interrogate castouts. Cross interrogate castouts occur when a data access from one CP finds a line modified in the cache of another CP.

The cache directory contains information as to whether the line is read only (RO), exclusive (EX), changed (CH) or invalid (INV).

A cache line that is RO is valid only in a read only state. The processor can only fetch from the line. Stores into the line are prohibited. The cache line may be shared simultaneously among different caches.

A cache line that is EX is valid but only appears in the cache of one processor. It is not resident in any other (remote) cache. The one (owning) processor is allowed to store into the line.

A cache line that is CH indicates that not only is the line valid and EX but that it has been stored into. That is the copy in main storage may not be up to date. When a CH line is replaced a copy is sent to main storage via a castout action.

An INV cache line is a line that is invalid.

In a typical computer system a first CP, P₁, may request an instruction or data from a line in a cache. Its own cache will be checked and if the particular line requested is read only (RO) it may make a store request, and via the storage control element (SCE), make that line exclusive (EX). Once the line is made exclusive, the storage control element (SCE) will indicate to the other caches that the line is invalid and the first cache will be free to write into that line. Once that line has been written, a CH-bit, indicating that the line has been changed, is set. Thereafter, if a second processor P₂ requests that line the change bit remains set and even if P₂ does not store into that line the change bit remains set. This occurs because the cache-to-cache bus is used to transfer the line. The reason the CH-bit stays on is that the line never goes through the main storage (i.e. the CH-bit on indicates that the storage is not up to date). As long as the change bit remains set, however, the line must be exclusive to only one cache at any time.

With the above approach concurrency may be lost unnecessarily since a line which could be shared by fetches from different CPUs simultaneously may now be forced to reside in a single cache most of the time. For instance, consider a line L that is more frequently accessed and is modified only relatively occasionally during certain time intervals. Once L is modified by a processor it will mostly stay CH among different caches until it is actually replaced from a cache through LRU replacement. Every time a processor issues a data fetch on line L, a cross interrogate (XI) will be necessary, if L is in a remote cache.

The above anomaly results due to the fact that the CH bit in a directory entry cannot tell whether such a changed line is no longer likely to be modified soon. Such problems often occur, for example, at power on when initial changes are made to the cache, and thereafter all that is usually required is read only (RO) status for the line.

The change bit will not be reset until the line ages out and is dumped to main memory.

As caches grow larger and the number of CPUs in a multiprocessor system increase, this problem becomes even greater. With bigger caches lines do not age out as quickly, and as the number of CPU's increases a line tends to be passed around among the CPU's more before getting the chance to age out.

There are a variety of cache management techniques known in the art. There is however no known art which is directed to minimizing the loss of cache concurrency due to limitations of the use of the change bit. The following is representative art in cache control mechanisms.

U.S. Patent 4,464,712 to Fletcher deals with certain strategies of level 2 cache replacements in a two level cache hierarchy (L1/L2). The L1 are the processors private (local) cache and the L2 is shared by all processors at a second level. An R bit and a L2 block entry are used as indicators of whether the block should be subject to replacement priority. Fletcher proposes some methods for manipulating the R bits on DLAT hits/misses. The present invention is independent of the second level cache (L2) hierarchy and is only concerned about the concurrency of data lines in a first level processor local caches.

In U.S. Patent 4,445,174 to Fletcher a performance benefit is claimed on the basis of using a common cache and reducing sharing overhead. The common cache is not used as a second level but rather as a first level cache on top of the processor's private caches. Fletcher '174 proposes deciding whether a line should be moved to the shared cache primarily based upon whether XI is observed and access to the line finds it is CH'd in another processor's private cache. Damaging sharing is detected via a remote CH conditions and the line is then put into a shared cache which is assumed to be fast for all processors. Concurrency in the present invention is achieved by allowing a line in different caches in a read only state when a damaging sharing characteristic disappears.

In U.S. Patent 4,181,937 to Hattori et al. an MP cache replacement scheme in a two level cache hierarchy is taught. Upon the decision of replacement of a block from L2 shared by all processors, blocks with fewer numbers of copies in the first level processor caches are given higher preference. This is supposed to increase concurrency at L1 with better L2 replacement strategies. The present invention is not concerned with L2 replacements.

In U.S. Patent 4,503,497 to Krygowski et al. a cache to cache transfer multiprocessor design is discussed wherein when a CH'd line is accessed by a remote processor, the line is transferred over as CH'd and exclusive copy without accessing main storage. The present invention improves on this design and requires an alteration to the CH bit.

In U.S. Patent 4,394,731 to Flusche et al. in cross interrogate situations (that is a line is remotely EX or CH'd) the line is fetched as EX (not CH) only when it is found CH'd in the remote cache. The cache to cache transfer environment is not discussed in Flusche et al. The present invention provides a capability to do this kind of EX (but also CH) fetch upon remote CH situations for a cache to cache transfer environment. This has several advantages since when using a cache to cache transfer facility the CH line may be transferred to another cache as EX and CH directly so that main storage update (castout) traffic is eliminated. Further in this system the condition of the CH line cannot be determined (that is whether the changes due to recent stores or whether the changes was pingponged back and forth with unnecessary loss of concurrency).

J. Archibald, J.J. Baer, Cache Coherence Protocols, ACM Transaction on Computer Systems, Vol. 4, No. 4, Nov. 1986, pages 273-278 are evaluating the efficiency of various solutions to the cache coherence problem concentrating on the associated protocols. The current invention on the other hand is focussing on a cache-to-cache transfer environment actually describing how the various local caches do interact.

Accordingly it is an object of the invention to provide a cache coherency method that accounts for how recently a cache line was changed, that avoids unnecessary restriction on concurrency of a cache line due to its being modified as a remote past event, and allows cache lines to be read only and be available to all processors if it has not been changed recently, and to provide an respective apparatus.

The solution is described in the characterizing part of claim 1 and claim 6.

The subject invention describes a cache coherence mechanism in which the CH state is divided into two substates, namely CH_{loc} and CHᵣₑₘ. The CH_{lco} state means that the cache has been recently stored into by the local processor. The CHᵣₑₘ state means that the line contains only modified data, that is data that was received from another cache and changed by that cache and inherited upon the last fetch. The present invention uses a CH_{loc} status bit to determine whether line L should be kept read only (RO) in both caches in the above example.

These and other objects, advantages and features of the invention will be more apparent upon reference to the specification and drawings.
- Fig. 1: is block diagram of a multiprocessor system using the present invention.
- Figs. 2 - 4: 4 are flow-charts describing prior art cache operation.
- Fig. 5: is a flow-chart showing operation of the present invention.

In multiprocessor mainframe computers such as the IBM Corporation 3090 series, store-in caches are used. For each processor Pᵢ there is a store-in cache Cᵢ.

A directory is associated with each cache and each entry in the directory can have one of three possible states:

INV - this indicates that the cache entry is invalid.

RO - this indicates that the cache entry is valid in a read only state. The processor can only fetch from the line and stores into the line are prohibited.

EX - this indicates that the line is valid and is not resident in any other cache other than the one it appears in (i.e. it is exclusive). The other caches are considered remote caches. The processor owning the cache which in turn owns the line will be allowed to store into the line, but not the non-owning processors.

There is also a CH bit (changed bit) associated with each cache directory entry. For a valid line in a cache, the CH bit is on only if the entry is in the EX state. When the CH bit is on it is said that that line is in the CH state. CH indicates that not only is the line valid and exclusive but also has been stored into. That is the copy of the line at the shared main memory (main storage or MS) may not reflect the most recent changes made by one of the processors. When the line is replaced, the modifications to the line are sent to main memory via a mechanism known as a castout action.

Multiple processors in the system are connected to a common storage control element (SCE). There is also a buffer control element (BCE) for each processor that maintains a directory for that processor's cache. All major memory accesses from a processor will be to its cache. Upon a cache miss (i.e. when the line is not found in the cache) the buffer control element makes a request to the storage control element to obtain a copy of the line and get the proper state (RO or EX) for the line. When a store from a processor does not find the line in the EX or CH state at its cache, the buffer control element needs to send a request for an exclusive state to the storage control element. When a processor stores into a valid (EX) line in the cache, that line is set to the CH state.

Upon receiving a request from a processor, storage control element 24 determines the actions needed to grant the proper authorizations in order to maintain architectural consistency. In a computing system such as the aforementioned IBM 3090, storage control element 24 maintains copies of directories for processor caches. Storage control element 24 can then determine whether there are copies of the line in another cache and what caches they are in and further is able to determine whether that line is in an RO or EX state. When a line is indicated as EX for a processor at the storage control element, the line may or may not be in the CH state in the cache at a particular moment.

In the IBM 3090 system there is a CTC bus (22). Cache lines are thus transferred between different caches via CTC bus 22 without directly going through main memory. There are three major types of memory access from prior units, namely I-Fetch (instruction fetch), D-Fetch (Data or Operand Fetch) and D-Store (Data or Operand Store). I-Fetch and D-Fetch accesses read data. D-stores modify memory contents. In certain situations, (for example, for an interlock instruction) a D-fetch may require an exclusive (EX) state.

The operations for an access to cache are as follows. First, when a processor accesses a line L in its cache with proper authorization the access is granted without extra actions. A line having an EX state can be accessed by any of the three request types, that is I-Fetch, D-Fetch or D-Store. A D-Store, however, requires an EX state with a CH bit turned on after the store.

When the processor Pᵢ requests a line L through an instruction fetch and when the line L is EX at a remote processor Pⱼ, the storage control element will signal to Pⱼ to release its EX status. Upon receiving the signal the buffer control element of Pⱼ will transfer the line to Pᵢ via the cache to cache bus. The buffer control element 16 of Pⱼ causes a castout of the line to main storage 26. At the end both caches 18 and 20 respectively, of processors i (10) and processor j (12) will have line L with a read only (RO state).

When processor Pᵢ (10) requests a line L through a data fetch (D-Fetch or Operand Fetch) and when L is exclusive at remote processor Pⱼ, storage control element 24 signals Pⱼ to release its EX status for line L. Upon receiving the signal, the buffer control element of Pⱼ causes a cache to cache transfer over bus 22 of the line L to Pᵢ as above. In case a line L is not changed at cache j (20) both cache i (18) and cache j (20) will obtain line L with a read only state as above (for the I-Fetch). If, however, L happens to be CH (changed) at cache j, processor i (10) will receive the line with a CH state (EX with a CH bit turned on) and the buffer control element 16 of processor j (12) will invalidate L from its own cache. The last situation is called the Conditional D-Fetch CH upon remote CH-hit.

When processor i has a miss on line L via an I-Fetch or D-Fetch, and when storage control element 24 finds the line not EX at any remote cache (for example, processor j) storage control element 24 may schedule the line transfer from a remote cache if found resident there or schedule the line fetch from main storage (26) depending on implementation. At the end processor i (10) will obtain line L in a read only state except when storage control element 24 finds that L is not in any of the caches for a D-Fetch miss. When a D-Fetch missed line is not in any of the caches, a mainframe computer such as the IBM 3090 grants Pᵢ an exclusive state to the newly fetched line from main storage 26.

When processor i requests exclusive status on a line that is read only in its own cache then the storage control element 24 must determine whether that line L is resident in other remote caches, for example, cache 2 (20) belonging to processor j (12). If line L is found, storage control element signals those remote caches (cache 2) to invalidate their copies. Storage control element 24 then grants an EX state on line L to processor i (10) when it makes sure that all the remote copies have been invalidated.

When processor i (10) requests an exclusive status on line L that is not resident in its cache, storage control element 24 determines whether the line is EX in remote caches (for example, processor j (12)). If not, the line is fetched to processor i (10) from a remote cache or from main storage 26 and all possible remote copies of L are signaled to be invalidated. Otherwise, the line is fetched to processor i (10) from the remote cache 20 with an exclusive state, which requires invalidation of the line from the remote cache. In the latter situation the line transferred to processor i (10) will also be in the CH state if it happens to be CH at the remote cache.

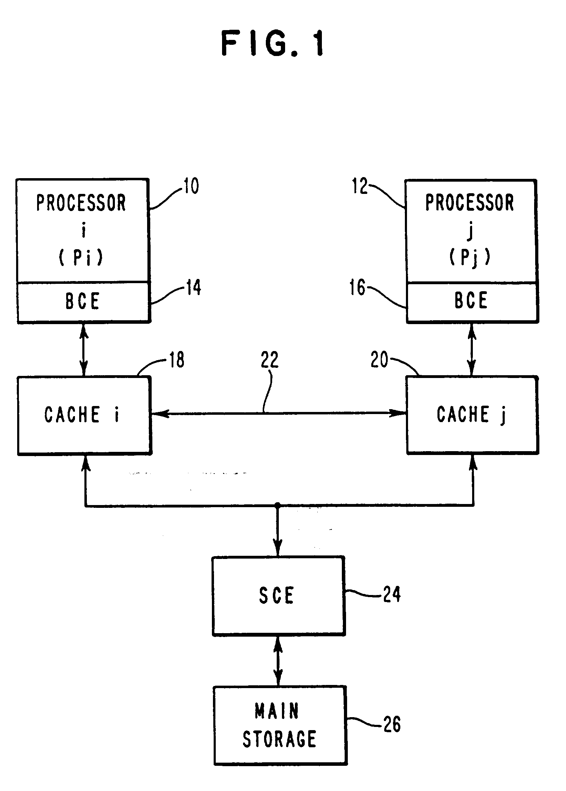

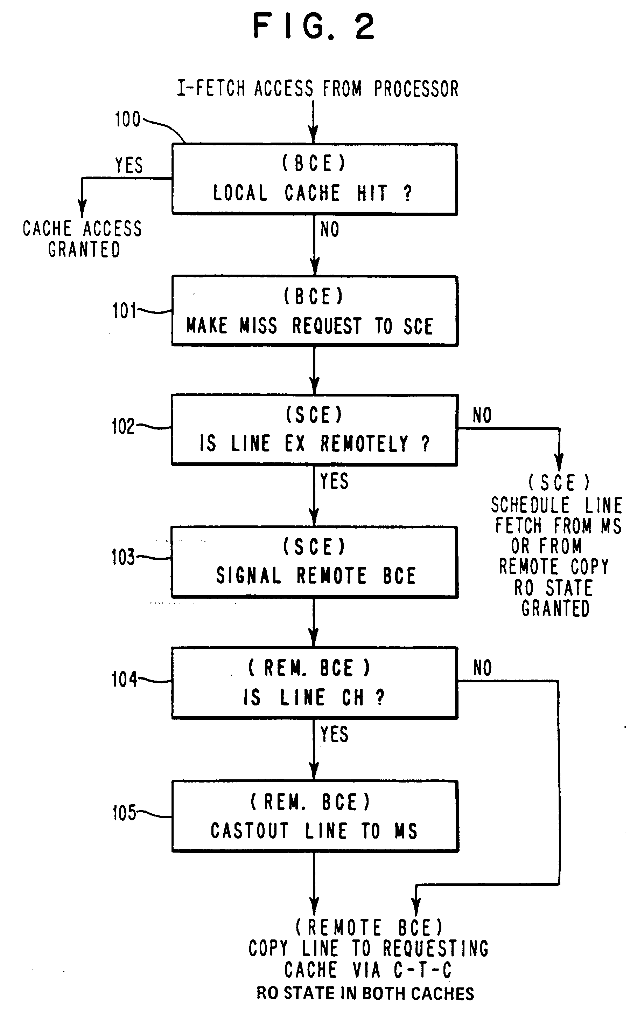

The foregoing operations are illustrated in Figs. 1 - 3. In Fig. 2 an instruction fetch access from the processor is shown. At Step 100 local buffer control element 14 tests to see if the line being accessed by the processor is in the cache. If yes, cache access is granted, if not, the buffer control element at Step 101 makes a miss request to the storage control element 24. At Step 102 storage control element 24 determines if the line is exclusively remote. If it is not, storage control element 24 schedules a line fetch from main storage or from the remote copy and read only status is granted. If it is exclusively held remotely, storage control element 24 signals the remote buffer control element at Step 103. At Step 104 the remote buffer control element determines if the line has been changed or (is CH). If not, remote buffer control element 16 copies the line to the requesting cache via a cache to cache transfer (over CTC bus 22) and assigns the line to be read only (RO) in both caches. If, however, the line is changed, the remote branch control element casts out the line to main storage.

Fig. 2 is a flow-chart of a data fetch access from the processor. At Step 200 buffer control element 14 determines if the line being requested by the processor is locally contained in local cache 18. If it is, cache access is granted. If it is not, however, buffer control element then will make a miss request to storage control element 24 at Step 201. At Step 202 it is determined if the line is exclusive remotely. If it is not, storage control element 24 schedules a line fetch from main storage or from a remote copy in another cache and read only status is granted. If, however, the line is exclusive remotely, storage control element 24 signals remote buffer control element 16 at Step 203 and at Step 204 remote buffer control element 16 determines if the line has been changed. If it has not been changed, remote buffer control element 16 copies a line to the requesting cache (18), casts out the line to main storage and assigns read only status in both caches (18 and 20) to that line. If, however, the line has been changed, remote buffer control element 16 moves a line to the requesting cache (18) and makes it exclusive/changed (EX/CH) and then invalidates its own copy of the line.

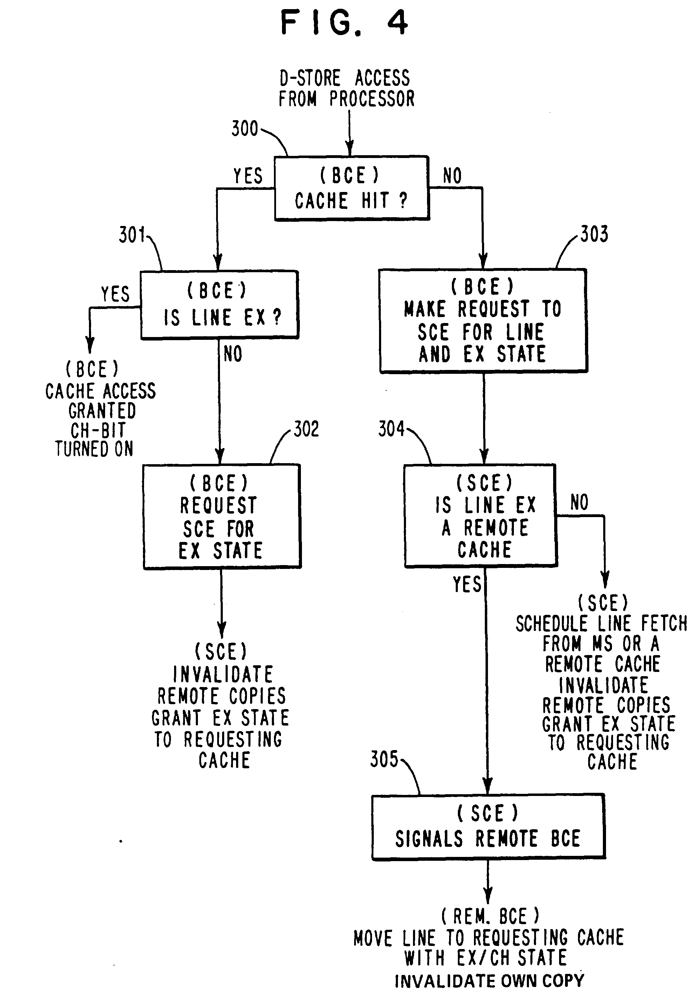

Fig. 4 shows a process for data store access. At Step 300 buffer control element 14 determines if the line being requested by the processor is contained in local cache 18. If it is, there is a cache hit. At Step 301 buffer control element 14 determines if the line is exclusive to the local cache (18). If it is, buffer control element 14 grants cache access and the CH bit is turned on. If it is not, however, buffer control element 14 requests storage control element 24 to make the line exclusive at Step 302. Then storage control element 24 invalidates remote copies and grants exclusive status to the line in requesting cache 18.

If, however, there is not a cache hit, at Step 303 buffer control element 14 makes a request to storage control element for the line and assigns exclusive status to the line. At Step 304 it is then determined by storage control element if the line is exclusive in remote cache, for example, cache 20. If it is not, storage control element 24 schedules the line for fetching from main storage or a remote cache and invalidates remote copies. It then further grants exclusive status to the line in the requesting cache. If, however, the line is exclusive in remote cache 20, storage control element 24 then at Step 305 signals remote buffer control element 16. Remote buffer control element 16 then moves a line to requesting cache 18 and assigns an exclusive/changed state and then invalidates it owns copy.

As will be clear upon reference to the foregoing description of a data fetch cache miss from processor i the requested line will be transferred as changed (CH) if it is found changed in remote processor j (12) although the particular D-Fetch only wants to read the line. If later on, processor j (12) wants to access the line before it is modified by processor i (10) another line transfer from cache i to cache j will be needed. This unnecessary overhead of line transfer and the associated cross interrogate (XI) activities, can be saved if upon the data fetch miss of processor i (10) the line is made read only (shared) in both caches at the expense of main storage castout (that is, storage of the line back into main storage 26). The conditional data fetch CH criteria has previously been found a reasonable choice, since modified data lines tend to be modified soon after they are data fetched. As a result, a data fetch with a CH state will most likely avoid the main storage castout traffic and subsequent EX state requests (when the line is stored with RO state).

Environmental changes, however, have caused the above described data fetch CH criteria to cause anomalous behavior. The CH line may be concurrently shared (with RO state) by multiple caches only when the line is instruction fetched (which is less likely) or when it ages out (replaced) from the cache and is referenced again through a miss later. As caches become larger and as more processors are added to a multiprocessor system, the chance for a CH line to age out without being accessed by any other processors decreases substantially. As a result, a line with CH status is more likely not shareable even when it no longer gets stored into for a long time and when the line is read from different processors repeatedly. This unnecessary loss of concurrency may be a significant performance bottleneck for certain applications.

This occurs because the CH bit is indicating both data contamination (i.e. main storage content 26 is not up to date) and the tendency of a line to be stored into. As a CH line gets passed around between different caches, the CH bit may not reflect the fact that the line is no longer being modified.

In the present invention, however, an additional state is assigned to a cache line in the cache directory, which is referred to herein as CH_{loc}, (local-change) that indicates whether or not a line has recently been modified by the processor. A line L is in the CH_{loc} state for processor i if it was modified since the last time cache i received a copy of the line. When a cache gets a copy of line L it is not in the CH_{loc} state, but CH_{loc} state is entered when the processor stores into the line. The CH_{loc} state is used as an indicator on the tendency for modification of a line, and may be used for various multiprocessor cache optimizations.

In the present invention, which may be considered a modification of the design discussed above and illustrated in Figs. 1 - 4, an extra bit (LCH bit) per cache directory entry is used in the buffer control element. The manipulation of the LCH bit is described below.

When a line is fetched into a cache, the associated LCH bit is turned off. But when a line is stored into from the processor both the associated CH bit and LCH bit are turned on.

Multiprocessor operation is now modified mainly for the situation in which a data fetch cache miss involves a remotely held exclusive cache line. Thus when a data fetch from processor i (10) misses a line L that is found exclusive at remote processor j (12) by storage control element 24, storage control element 24 signals remote buffer control element j (16) of processor j (10) to release its exclusive status on line L. Upon receiving that signal, buffer control element j (16) of processor j (12) checks whether the line is in a CH_{loc} state (i.e. whether the associated LCH bit is on). If so, the line is sent to processor i (via CTC bus 22) having both an exclusive (EX) and changed (CH) state. Otherwise processor i (10) will receive line L having a read only (RO) state. This involves castout to main storage 26 if L has CH status at cache j (20).

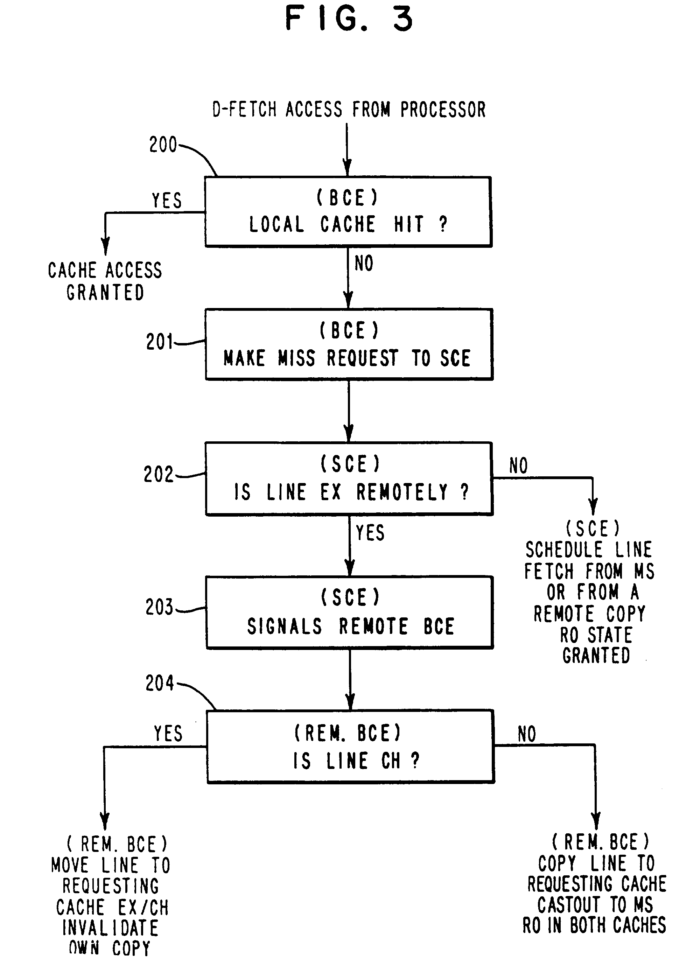

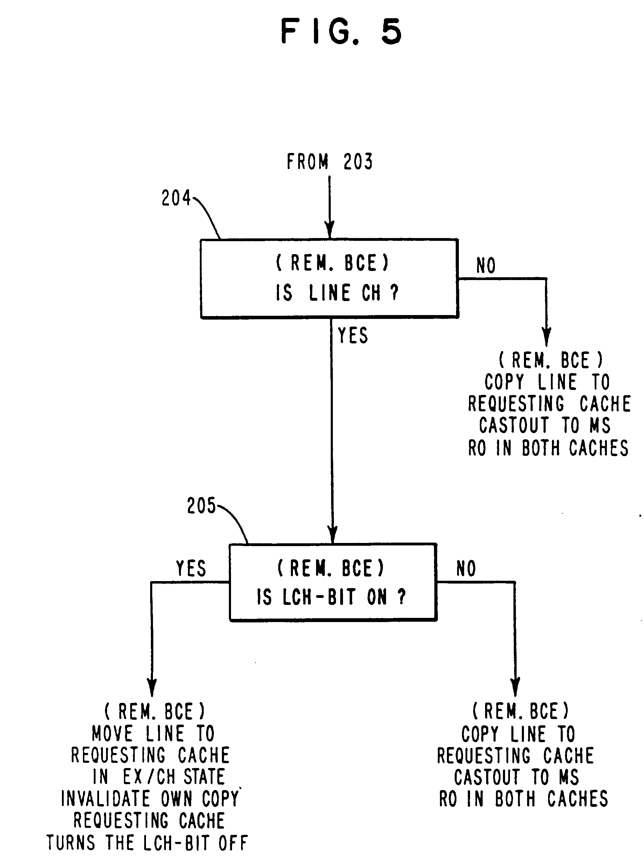

Fig. 5 shows the logical steps of Fig. 3 for operations related to LCH bits. Hence, the flow-chart of FIG. 3 is modified such that a data fetch miss to a remote CH line results on EX fetch if the line is also in a CH_{loc} state at the remote cache, and will result in RO sharing otherwise. This automatically increases concurrency for line sharing when a line no longer tends to be modified, at the expense of some additional memory castouts.

Referring to Figs. 3 and 5. If in Fig. 3 at Step 202 storage control element 24 has determined that the line being accessed or requested is remotely exclusive after there has been a cache miss then instead of going to Step 203 of Fig. 3, the modified operation now continues as Step 204 in Fig. 5. At this step remote buffer control element (16) now determines if the line has a status of CH. If it has not, remote buffer control element 16 copies the line to the requesting cache, does a castout to main storage and sets the line to read only status in both caches. If, however, remote buffer control element (16) determines that the line has been changed it next determines at Step 205 whether or not the LCH bit has been turned on. If the LCH bit has not been turned on the remote buffer control element copies the line to the requesting cache, makes a castout to main storage 26 and sets the line to read only in both caches. If, however, it determines that the LCH bit is on, it moves the lines of the requesting cache in a EX/CH state and invalidates its own copy. The requesting cache then turns the LCH bit off.

In the above design modification the CH state may be considered as being partitioned into two substates, i.e., CH_{loc} and CHᵣₑₘ, where CHᵣₑₘ means that the line is contaminated due to modifications carried from another cache, while CH_{loc} means that the line is contaminated due to recent stores from the local processors.

The CH_{loc} state is used mainly as an assist to multiprocessor cache management and is not critical to architecture correctness if it has been implemented properly. Therefore it is not necessary to provide ECC for the correction of transient errors on the LCH bits. In some implementations, it is neither necessary to have the LCH bits on critical path for cache accesses (e.g. stores). In some implementations it is also possible simply to approximate the CH_{loc} states to reduce design complexity.

The local-change concept may be applied to various multiprocessor cache designs. For instance, it may be used in a store-thru multiprocessor cache design having exclusive states. It is not necessary to use CH bits as in store-in designs. The CH_{loc} histories, however, may still be used to determine whether a data fetch cache miss should acquire an EX state.

## Claims

1. A multiprocessor system having a main storage (26) and a plurality of caches (18,20) of storing lines of information;
each line stored in any of said caches having either a valid state or invalid state (INV) and also having either a read-only state (RO) or exclusive state (EX),
any particular one of said lines stored in any particular one of said caches and having said valid and exclusive states being readable and modifiable by said multiprocessor system,
any particular one of said lines stored in any particular one of said caches and having said valid and read-only states being readable and not modifiable by said multiprocessor system, and
any particular one of said lines stored in any particular one of said caches and having said invalid state being not readable and not modifiable by said multiprocessor system; each cache having cache control means (14,16) ;
the system further comprising an apparatus (14,16,24) for determining whether said read-only state or said exclusive state is assigned to a line of information fetched into one of said caches when said fetched line is already stored in another one of said caches in order to improve concurrency in said caches; the system being characterised by
a cache-to-cache transfer facility (22) interconnecting said caches for directly transferring lines of information among said caches without castout to said main storage;
means (14,16) for maintaining local change state information (LCH) for each line stored in any of said caches, said local change state information for a particular one of said lines stored in a particular one of said caches indicating whether or not said particular one of said lines stored in said particular one of said caches has been modified by said multiprocessor system while said particular one of said lines has been resident in said particular one of said caches;
means coupled to said maintaining means for assigning a read-only state to a fetched line in a second cache if said fetched line has a read-only state in a first cache or has an exclusive state in said first cache and has not been modified by said multiprocessor system based upon said local change state information for said fetched line while said fetched line has been in said first cache; and
said cache-to-cache transfer facility (22) copying said line being requested by said second cache form said first cache to said second cache, said cache control means assigning a read-only state to said line in said first cache;
means coupled to said maintaining means for assigning an exclusive state to a fetched line in a second cache only if said fetched line has an exclusive state in a first another cache and has been modified in said first cache by said multiprocessor system based upon said local change state information for said fetched line while said fetched line has been in said first cache;
said cache-to-cache transfer facility (22) moving said line being requested by said second cache from said first cache to said second cache, said cache control means invalidating the copy of said line in said first cache.

2. A multiprocessor system as defined in claim 1
wherein said means for maintaining local change state information includes a local change bit associated with each line stored in any of said caches, said local change bit associated with any particular one of said lines stored in any particular one of said caches maintaining said local change state information for said particular one of said lines stored in said particular one of said caches.

3. A multiprocessor system as defined in claim 2 wherein said caches are store-thru caches and wherein said local change bit associated with any particular one of said lines stored in any particular one of said caches indicates whether or not said particular one of said lines stored in said particular one of said caches has been modified by said multiprocessor system while resident in said particular one of said caches.

4. A multiprocessor system as defined in claim 2
wherein said caches are store-in caches, said local change bit associated with any particular one of said lines stored in any particular one of said caches indicating whether or not said particular one of said lines stored in said particular one of said caches has been modified by said multiprocessor system while resident in said particular one of said caches irrespective of whether or not said particular one of said lines stored in said particular one of said caches has been modified by said multiprocessor system without castout to said main storage before being fetched into said particular one of said caches.

5. A multiprocessor system as defined in claim 4 and
further comprising a global change bit associated with each line stored in any of said caches, said global change bit associated with any particular one of said lines stored in any particular one of said caches indicating whether or not said particular one of said lines stored in said particular one of said caches has been modified by said multiprocessor system without updating said main storage before being fetched into said particular one of said caches.

6. A method for maintaining coherence in a memory system of a type having a main memory (26) and a plurality of caches (18, 20) for storing lines of information (1) and a separate processor associated with and served by each of said caches, each line stored in any of said caches having either a valid state or invalid state (INV) and also having either a read-only state (RO) or exclusive state (EX) any particular one of said lines stored in any particular one of said caches and having said valid and exclusive states being readable and modifiable by said processor associated with said particular one of said caches, any particular one of said lines stored in any particular one of said caches and having said valid and read-only states being readable and not modifiable by said processor associated with said particular one of said caches, and any particular one of said lines stored in said particular one of said caches and having said invalid state being not readable and not modifiable by said processor associated with said particular one of said caches, said method being characterized by the steps of:
a cache-to-cache transfer facility (22) interconnecting said caches for directly transferring lines of information among said caches without castout to said main memory;
assigning a local change state (LCH) to each line stored in any of said caches in said valid and exclusive states if, and only if, said line has been modified while stored in any of said caches by said processor associated with said any of said caches cache;
when a needed line is requested by any one of said processors and said cache, called the second cache, associated with said processor requesting said needed line does not contain said needed line in said valid state and said needed line is contained in another one of said caches, called the first cache, other than said cache associated with said processor requesting said needed line and has said valid and exclusive states, fetching said needed line to said cache associated with said processor requesting said needed line;
assigning said exclusive state to said needed line in said cache associated with said processor requesting said needed line only if said needed line has said local change state in said another one of said caches; and
said cache-to-cache transfer facility (22) moving said line being requested by said second cache from said first cache to said second cache, said cache control means invalidating the copy of said line in said first cache;
assigning said read-only state to said needed line in said cache associated with said processor requesting said needed line if said needed line does not have said local change state in said another one of said caches;
said cache-to-cache transfer facility (22) copying said line being requested by said second cache from said first cache to said second cache, said cache control means assigning a read-only state to said line in said first cache.

7. An method as defined in claim 6 and further comprising the step of:
assigning said valid and said read-only states to said needed line in said another one of said caches if said needed line has been assigned said read-only state in said cache associated with said processor requesting said needed line; and
assigning said invalid state to said needed line in said another one of said caches if said needed line has been assigned said exclusive state in said cache associated with said processor requesting said needed line.

8. An method as defined in claim 6 wherein said caches are store-in caches.

## Patentansprüche

1. Mehrprozessorsystem mit einem Hauptspeicher (26) und einer Vielzahl von Cachespeichern (18, 20) zur Speicherung von Informationszeilen;
wobei jede Zeile, die in einem der Cachespeicher gespeichert ist, entweder einen gültigen Zustand oder einen ungültigen Zustand (INV) und ebenso entweder einen Nur-Lese-Zustand (RO) oder einen Exklusivzustand (EX) besitzt;
wobei irgendeine bestimmte, in irgendeinem bestimmten Cachespeicher gespeicherte Zeile, die sich im gültigen und exklusiven Zustand befindet, durch das Mehrprozessorsystem gelesen und modifiziert werden kann,
wobei irgendeine bestimmte, in irgendeinem bestimmten Cachespeicher gespeicherte Zeile, die sich im gültigen und Nur-Lese-Zustand befindet, durch das Mehrprozessorsystem gelesen und nicht modifiziert werden kann, und
wobei irgendeine bestimmte, in irgendeinem bestimmten Cachespeicher gespeicherte Zeile, die sich im ungültigen Zustand befindet, durch das Mehrprozessorsystem nicht geleser und nicht modifiziert werden kann,
wobei jeder Cachespeicher Cachespeichersteuermittel (14, 16) besitzt;
wobei das System weiterhin eine Vorrichtung (14, 16, 24) umfaßt, um festzustellen, ob der Nur-Lese-Zustand oder der Exklusiv-Zustand einer Informationszeile zugeordnet ist, die in einen Cachespeicher gelesen wird, wenn die gelesene Zeile schon in einem anderen Cachespeicher gespeichert ist, um die Parallelität in den Cachespeichern zu erhöhen;
wobei das System gekennzeichnet ist durch
eine Cache-Cache-Übertragungseinrichtung (22), die die Cachespeicher zur direkten Übertragung von Informationszeilen zwischen den Cachespeichern ohne Übertragung zum Hauptspeicher verbindet;
Mittel (14, 16) zur Verwaltung von lokaler Zustandsänderungsinformation (LCH) für jede Zeile, die in einem Cachespeicher gespeichert ist, wobei die lokale Zustandsänderungsinformation für eine bestimmte Zeile, die in einem bestimmten Cachespeicher gespeichert ist, anzeigt, ob eine bestimmte Zeile, die in einem bestimmten Cachespeicher gespeichert wurde, vom Mehrprozessorsystem modifiziert wurde oder nicht, während sich die bestimmte Zeile in dem bestimmten Cachespeicher befand;
Mittel, die mit den Verwaltungsmitteln verbunden sind, um einer gelesenen Zeile in einem zweiten Cachespeicher einen Nur-Lese-Zustand zuzuordnen, wenn sich die gelesene Zeile in einem erstem Cachespeicher in einem Nur-Lese-Zustand befindet oder wenn sie sich in dem ersten Cachespeicher in einem Exklusiv-Zustand befindet und vom Mehrprozessorsystem nicht modifiziert wurde, auf der Grundlage der lokalen Zustandsänderungsinformation für die gelesene Zeile, während sich diese gelesene Zeile in dem ersten Cachespeicher befand; und
wobei die Cache-Cache-Übertragungsvorrichtung (22) die Zeile kopiert, die durch den zweiten Cachespeicher vom ersten Cachespeicher zum zweiten Cachespeicher angefordert wird, wobei die Cachespeichersteuermittel der Zeile im ersten Cachespeicher einen Nur-Lese-Zustand zuordnen;
Mittel, die mit den Verwaltungsmitteln verbunden sind, um einer gelesenen Zeile in einem zweiten Cachespeicher einen Exklusivzustand nur dann zuzuordnen, wenn sich die gelesene Zeile in einem ersten anderen Cachespeicher in einem Exklusiv-Zustand befindet und wenn sie in dem ersten Cachespeicher vom Mehrprozessorsystem modifiziert wurde, auf der Grundlage der lokalen Zustandsänderungsinformation für die gelesene Zeile, während sich diese gelesene Zeile in dem ersten Cachespeicher befand;
wobei die Cache-zu-Cache-Übertragungsvorrichtung (22) die Zeile überträgt, die durch den zweiten Cachspeicher vom ersten Cachespeicher zum zweiten Cachespeicher angefordert wird, wobei die Cachespeichersteuermittel die Kopie der Zeile im ersten Cachespeicher ungültig machen.

2. Mehrprozessorsystem gemäß der Definition in Anspruch 1,
wobei das Mittel zur Verwaltung von lokaler Zustandsänderungsinformation ein lokales Veränderungsbit enthält, das jeder Zeile zugeordnet ist, die in einem der Cachespeicher gespeichert ist, wobei das lokale Veränderungsbit, das einer bestimmten, in einem bestimmten Cachespeicher gespeicherten Zeile zugeordnet ist, die lokale Zustandsänderungsinformation für diese bestimmte Zeile, die in einem bestimmten Cachespeicher gespeichert ist, enthält.

3. Mehrprozessorsystem gemäß der Definition in Anspruch 2, in dem die Cachespeicher Durchspeicher-Cachespeicher sind und in dem das lokale Veränderungsbit, das einer bestimmten in einem bestimmten Cachespeicher gespeicherten Zeile zugeordnet ist, anzeigt, ob die bestimmte, im bestimmten Cachespeicher gespeicherte Zeile vom Mehrprozessorsystem modifiziert wurde oder nicht, während sie sich in dem bestimmten Cachespeicher befand.

4. Mehrprozessorsystem gemäß der Definition in Anspruch 2,
in dem die Cachespeicher Einspeicher-Cachespeicher sind und das lokale Veränderungsbit, das einer bestimmten in einem bestimmten Cachespeicher gespeicherten Zeile zugeordnet ist, anzeigt, ob die bestimmte, im bestimmten Cachespeicher gespeicherte Zeile vom Mehrprozessorsystem modifiziert wurde oder nicht, während sie sich in dem bestimmten Cachespeicher befand, unabhängig davon, ob die bestimmte im bestimmten Cachespeicher gespeicherte Zeile vom Mehrprozessorsystem ohne Übertragung zum Hauptspeicher modifiziert wurde, bevor sie in den bestimmten Cachespeicher gelesen wird.

5. Mehrprozessorsystem gemäß der Definition in Anspruch 4,
das weiterhin ein globales Veränderungsbit umfaßt, das jeder in einem der Cachespeicher gespeicherten Zeile zugeordnet ist, wobei das globale Veränderungsbit, das irgendeiner bestimmten, in irgendeinem bestimmten Cachespeicher gespeicherten Zeile zugeordnet ist, anzeigt, ob die bestimmte, im bestimmten Cachespeicher gespeicherte Zeile vom Mehrprozessorsystem modifiziert wurde oder nicht, ohne den Hauptspeicher zu aktualisieren, bevor sie in den bestimmten Cachespeicher gelesen wird.

6. Verfahren zur Aufrechterhaltung der Kohärenz in einem Speichersystem mit einem Hauptspeicher (26) und einer Vielzahl von Cachespeichern (18, 20) zur Speicherung von Informationszeilen (1) und mit einem gesonderten Prozessor, der jedem der Cachspeicher zugeordnet ist und von diesen bedient wird, wobei jede Zeile, die in irgendeinem Cachespeicher gespeichert ist, entweder einen gültigen Zustand oder einen ungültigen Zustand (INV) und ebenso entweder einen Nur-Lese-Zustand (RO) oder einen Exklusivzustand (EX) besitzt, wobei irgendeine bestimmte, in irgendeinem bestimmten Cachespeicher gespeicherte Zeile, die sich im gültigen und exklusiven Zustand befindet, durch den Prozessor, der dem bestimmten Cachespeicher zugeordnet ist, gelesen und modifiziert werden kann, wobei irgendeine bestimmte, in irgendeinem bestimmten Cachespeicher gespeicherte Zeile, die sich im gültigen und Nur-Lese-Zustand befindet, durch den Prozessor, der dem bestimmten Cachespeicher zugeordnet ist, gelesen und nicht modifiziert werden kann, und wobei irgendeine bestimmte, in irgendeinem bestimmten Cachespeicher gespeicherte Zeile, die sich im ungültigen Zustand befindet, durch den Prozessor, der dem bestimmten Cachespeicher zugeordnet ist, nicht gelesen und nicht modifiziert werden kann, wobei das Verfahren durch die folgenden Schritte gekennzeichnet ist:
eine Cache-Cache-Übertragungseinrichtung (22), die die Cachespeicher zur direkten Übertragung von Informationszeilen zwischen den Cachespeichern ohne Übertragung zum Hauptspeicher verbindet;
Zuordnung eines lokalen Veränderungszustandes (LCH) zu jeder in irgendeinem der Cachespeicher gespeicherten Zeile in den gültigen und exklusiven Zuständen ausschließlich dann, wenn die Zeile von dem dem Cachespeicher zugeordneten Prozessor geändert wurde, während sie in einem der Cachespeicher gespeichert war;
wenn eine benötigte Zeile von irgendeinem der Prozessoren angefordert wird und ein Cachespeicher, der als zweiter Cachespeicher bezeichnet wird, und dem Prozessor, der die benötigte Zeile anfordert, zugeordnet ist, die benötigte Zeile in dem gültigen Zustand nicht enthält und die benötigte Zeile in einem anderen Cachespeicher enthalten ist, der als erster Cachespeicher bezeichnet wird und nicht gleich dem Cachespeicher ist, der dem Prozessor zugeordnet ist, der die benötigte Zeile anfordert und die gültigen und exklusiven Zustände besitzt, wird die benötigte Zeile in den Cachespeicher gelesen, der dem Prozessor zugeordnet ist, der die benötigte Zeile anfordert;
Zuordnung des Exklusivzustandes zur benötigten Zeile in dem Cachespeicher, der dem Prozessor zugeordnet ist, der die benötigte Zeile anfordert, nur dann, wenn die benötigte zeile den lokalen Änderungszustand in einem anderen Cachespeicher besitzt; und
Übertragung der Zeile, die durch den zweiten Cachespeicher vom ersten Cachespeicher zum zweiten Cachespeicher angefordert wird, durch die Cache-zu-Cache-Übertragungsvorrichtung (22), wobei das Cachspeichersteuermittel die Kopie der Zeile im ersten Cachespeicher ungültig macht;
Zuordnung des Nur-Lese-Zustandes zur benötigten Zeile in dem Cachespeicher, der dem Prozessor zugeordnet ist, der die benötigte Zeile anfordert, wenn die benötigte Zeile nicht in einem anderen Cachespeicher den lokalen Änderungszustand besitzt;
Kopieren der Zeile, die durch den zweiten Cachespeicher vom ersten Cachespeicher zum zweiten Cachespeicher angefordert wird, durch die Cache-Cache-Übertragungsvorrichtung (22), wobei das Cachespeichersteuermittel der Zeile im ersten Cachespeicher einen Nur-Lese-Zustand zuordnet.

7. Verfahren wie in Anspruch 6 definiert, das weiterhin den folgenden Schritt umfaßt:
Zuordnung der gültigen und Nur-Lese-Zustände zur benötigten Zeile in einem anderen der Cachespeicher, falls der benötigten Zeile der Nur-Lese-Zustand in dem Cachespeicher zugeordnet wurde, der dem Prozessor zugeordnet ist, der die benötigte Zeile anfordert; und
Zuordnung eines ungültigen Zustandes zur benötigten Zeile in einem anderen der Cachespeicher, falls der benötigten Zeile der Exklusiv-Zustand in dem Cachespeicher zugeordnet wurde, der dem Prozessor zugeordnet ist, der die benötigte Zeile anfordert.

8. Verfahren wie in Anspruch 6 definiert, wobei die Cachespeicher Einspeicher-Cachespeicher sind.

## Revendications

1. Un système à multiprocesseur comportant une mémoire principale (26) et une pluralité d'antémémoires (18, 20) de stockage de lignes d'information;
chaque ligne stockée dans l'une quelconque desdites antémémoires ayant soit un état valide soit un état invalide (INV) et ayant également soit un état de lecteur seule (RO) soit un état exclusif (EX),
l'une quelconque particulière desdites lignes, stockée dans une antémémoire quelconque particulière parmi lesdites antémémoires et ayant lesdits états valide et exclusif, étant lisible et modifiable par ledit système à multiprocesseur,
toute ligne particulière quelconque parmi lesdites lignes, stockées dans l'une quelconque particulière desdites antémémoires et ayant lesdits états valides et de lecture seule, étant lisible et n'étant pas modifiable par ledit système à multiprocesseur, et
toute ligne particulière quelconque parmi lesdites lignes, stockées dans une antémémoire quelconque particulière desdites antémémoires et ayant ledit état invalide, n'étant pas lisible et n'étant pas modifiable par ledit système à multiprocesseur; chaque antémémoire ayant un moyen de commande d'antémémoire (14, 16);
le système comprenant en outre un dispositif (14, 16, 24) destiné à déterminer si ledit état à lecture seule ou ledit état exclusif est affecté à une ligne d'information extraite dans l'une desdites antémémoires, lorsque ladite ligne extraite est déjà stockée dans une autre desdites antémémoires, de manière à améliorer la concurrence dans lesdites antémémoires;
le système étant caractérisé par une ressource de transfert d'antémémoire à antémémoire (22) assurant l'interconnexion desdites antémémoires pour permettre un transfert direct de lignes d'information parmi lesdites antémémoires sans avoir à procéder à un désengorgement par expulsion, à destination de ladite mémoire principale,
des moyens (14, 16), destinés à maintenir une information de changement d'état local (LCH) pour chaque ligne stockée dans l'une quelconque desdites antémémoires, ladite information de changement d'état local, pour une ligne particulière parmi lesdites lignes stockées dans une particulière desdites antémémoires, indiquant si ladite ligne particulière parmi lesdites lignes, stockées dans ladite antémémoire particulière parmi lesdites antémémoires, a été modifiée par ledit système à microprocesseur pendant que ladite ligne particulière parmi lesdites lignes était résidente dans ladite antémémoire particulière parmi lesdites antémémoires;
des moyens couplés auxdits moyens de maintien, en vue d'affecter un état de lecture seule à une ligne extraite dans une deuxième antémémoire, si ladite ligne extraite a un état de lecture seule dans une première antémémoire, ou a un état exclusif dans ladite antémémoire et n'a pas été modifiée par ledit système à microprocesseur d'après l'information de modification d'état local pour ladite ligne extraite, pendant que ladite ligne extraite se trouvait dans ladite première antémémoire; et
ladite ressource de transfert d'antémémoire à antémémoire (22) effectuant une copie de ladite ligne en cours de requête par ladite deuxième antémémoire, depuis ladite première antémémoire à ladite deuxième antémémoire, ledit moyen de commande d'antémémoire affectant un état de lecture seule à ladite ligne dans ladite première antémémoire;
des moyens couplés audit moyen de maintien afin d'affecter un état exclusif à une ligne extraite dans une deuxième antémémoire seulement si ladite ligne extraite avait un état exclusif dans une première autre antémémoire et a subi une modification dans ladite première antémémoire par ledit système à multiprocesseur selon ladite information de changement local pour ladite ligne extraite, pendant que ladite ligne extraite se trouvait dans ladite première antémémoire;
ladite ressource de transfert d'antémémoire à antémémoire (22) déplaçant ladite ligne en cours de requête par ladite deuxième antémémoire, de ladite première antémémoire à ladite deuxième antémémoire; ledit moyen de commande d'antémémoire invalidant la copie de ladite ligne dans ladite première antémémoire.

2. Un système à multiprocesseur selon la revendication 1, dans lequel ledit moyen de maintien de l'information de modification d'état local comprend un bit de modification locale associé à chaque ligne stockée dans l'une quelconque desdites antémémoires, ledit bit de modification locale, associé à l'une quelconque particulière desdites lignes stockées dans l'une quelconque particulière desdites antémémoires, maintenant ladite information de changement d'état local pour ladite ligne particulière parmi lesdites lignes stockées dans ladite particulières desdites antémémoires.

3. Un système à multiprocesseur selon la revendication 2, dans lequel lesdites antémémoires sont des antémémoires (store-thru) à mise à jour en antémémoire et en mémoire principale, et dans lequel ledit bit de modification locale associé à l'une quelconque particulière desdites lignes stockées dans l'une quelconque particulière desdites antémémoires indique si ladite ligne particulière parmi lesdites linges stockées dans ladite particulière desdites antémémoires a été modifiée par ledit système à multiprocesseur pendant qu'elle était résidente dans ladite antémémoire particulière desdites antémémoires.

4. Un système à multiprocesseur selon la revendication 2, dans lequel lesdites antémémoires sont des antémémoires (store-in) à mise à jour en cache seul, ledit bit de modification locale associé à l'une quelconque particulière desdites lignes stockées dans l'une quelconque particulière desdites antémémoires indiquant si l'une particulière parmi lesdites linges stockées dans ladite antémémoire particulière desdites antémémoires a été modifiée par ledit système à multiprocesseur pendant qu'elle résidait dans ladite antémémoire particulière parmi lesdites antémémoires, indépendamment du fait que ladite ligne particulière parmi lesdites lignes stockées dans ladite antémémoire particulière parmi lesdites antémémoires a été modifiée par ledit système à multiprocesseur sans désengorgement par expulsion vers ladite mémoire principale avant extraction dans ladite antémémoire particulière parmi lesdites antémémoires.

5. Un système à multiprocesseur selon la revendication 4, et comprenant en outre un bit de modification globale associé à chaque ligne stockée à chaque ligne stockée dans l'une quelconque desdites antémémoires, ledit bit de modification globale, associé à l'une quelconque particulière desdites lignes stockées dans l'une quelconque particulière desdites antémémoires, indiquant si ladite ligne particulière parmi lesdites lignes stockées dans ladite antémémoire parmi lesdites antémémoires a été modifiée par ledit système à multiprocesseur sans mise à jour de ladite mémoire principale avant extraction dans ladite antémémoire particulière parmi lesdites antémémoires.

6. Un procédé de maintien de la cohérence dans un système mémoire du type comportant une mémoire principale (26) et une pluralité d'antémémoires (18, 20) destinées à stocker des lignes d'information (1) et un processeur séparé associé à et servi par chacune desdites antémémoires, chaque ligne stockée dans l'une quelconque desdites antémémoires ayant soit un état valide soit un état invalide (INV) et ayant également soit un état de lecture seule (RO) soit un état exclusif (EX), chaque ligne particulière quelconque desdites lignes, stockées dans ladite antémémoire particulière parmi lesdites antémémoires et ayant lesdits états valides et exclusifs, étant lisible et modifiable par ledit processeur associé à une antémémoire particulière parmi lesdites antémémoires, chaque ligne particulière parmi lesdites lignes, stockées dans l'une quelconque particulière desdites antémémoires et ayant lesdits état valide et de lecture seule, étant lisible et non modifiable par ledit processeur associé à ladite antémémoire particulière parmi lesdites antémémoires, et chaque ligne quelconque particulière desdites lignes, stockées dans ladite antémémoire particulière et ayant ledit état invalide, n'étant pas lisible et n'étant pas modifiable par ledit processeur associé à ladite antémémoire particulière parmi lesdites antémémoires, le procédé étant caractérisé par les étapes consistant à :
interconnecter, par une ressource de transfert d'antémémoire à antémémoire (22), lesdites antémémoires afin de transférer directement des lignes d'information parmi lesdites antémémoires sans avoir à désengorger en ayant recours à ladite mémoire principale;
affecter un état de changement local (LCH) à chaque ligne stockée dans l'une quelconque desdites antémémoires se trouvant dans lesdits états valide et exclusif si et seulement si ladite ligne a été modifiée pendant qu'elle était stockée dans l'une quelconque desdites antémémoires par ledit processeur associé à l'une quelconque desdites antémémoires;
lorsque qu'une ligne nécessaire est requise par l'un quelconque desdits processeurs et que ladite antémémoire, appelée la deuxième antémémoire, associée audit processeur faisant requête de ladite ligne nécessaire ne contient pas ladite ligne nécessaire à son dit état valide, et que ladite ligne nécessaire est contenue dans une autre parmi lesdites antémémoires, appelée la première antémémoire, qui est différente de ladite antémémoire associée audit processeur faisant requête de ladite ligne nécessaire et ayant lesdits états valide et exclusif, procéder à l'extraction de ladite deuxième ligne à destination de ladite antémémoire associée audit processeur faisant requête de ladite ligne nécessaire;
affecter ledit état exclusif à ladite ligne nécessaire dans ladite antémémoire associée audit processeur faisant requête de ladite ligne, seulement si ladite ligne nécessaire a ledit état de modification locale dans ladite autre desdites antémémoires;
déplacer, par ladite ressource de transfert d'antémémoire à antémémoire (22), ladite ligne en cours de requête par ladite deuxième antémémoire, depuis ladite première antémémoire vers ladite deuxième antémémoire, ledit moyen de commande d'antémémoire invalidant la copie de ladite ligne dans ladite première antémémoire;
affecter ledit état de lecture seule à ladite ligne nécessaire dans ladite antémémoire associée audit processeur faisant requête de ladite ligne nécessaire, si ladite ligne nécessaire ne comporte pas ledit état de changement local dans une dite autre desdites antémémoires;
copier, par ladite ressource de transfert d'antémémoire à antémémoire (22), ladite ligne en cours de requête par ladite deuxième antémémoire de ladite première antémémoire à ladite deuxième antémémoire, ledit moyen de commande d'antémémoire affectant un état de lecture seule auxdites lignes se trouvant dans ladite première antémémoire.

7. Procédé selon la revendication 6, comprenant en outre l'étape consistant à:
affecter lesdits états valide et de lecture seule à ladite ligne nécessaire dans ladite autre parmi lesdites antémémoires si à ladite ligne nécessaire a été affecté ledit état de lecture seule dans ladite antémémoire associée audit processeur faisant requête de ladite ligne nécessaire; et
affecter ledit état invalide à ladite ligne nécessaire dans ladite autre desdites antémémoires si à ladite ligne nécessaire a été affecté ledit état exclusif dans ladite antémémoire associée audit processeur faisant requête de ladite ligne nécessaire.

8. Procédé selon la revendication 6, dans lequel lesdites antémémoires sont des antémémoires (store-in) à mise à jour en cache seul.
